# EUROPÄISCHE PATENTSCHRIFT

(11) **EP 3 520 014 B1**
(45) Veröffentlichungstag und Bekanntmachung des Hinweises auf die Patenterteilung: **15.04.2020**
(21) Anmeldenummer: 16805757.8
(22) Anmeldetag: 28.11.2016
(51) Int. Cl.: G06F 21/62

(54) **VERFAHREN UND SYSTEM ZUM ANONYMISIEREN VON DATENBESTÄNDEN**
METHOD AND SYSTEM FOR ANONYMISING DATA STOCKS
PROCÉDÉ ET SYSTÈME D'ANONYMISATION D'ENSEMBLES DE DONNÉES

(43) Veröffentlichungstag der Anmeldung: 07.08.2019
(73) Patentinhaber: Siemens Aktiengesellschaft, 80333 München (DE)
(72) Erfinder: MOCK, Michael, 53217 Bonn (DE); HAPFELMEIER, Andreas, 82054 Sauerlach (DE); IMIG, Mike, 50937 Köln (DE)
(86) Internationale Anmeldenummer: PCT/EP2016/078953
(87) Internationale Veröffentlichungsnummer: WO 2018/095547

(56) Entgegenhaltungen:
- US-A1- 2010 332 537
- S Ransing ET AL: "Data Anonymization Using Map Reduce On Cloud by Using Scalable Two - Phase Top-Down Specialization Approach", International Journal of Science and Research (IJSR), 31. Dezember 2014 (2014-12-31), Seiten 1916-1919, XP055388869, Gefunden im Internet: URL:https://www.ijsr.net/archive/v3i12/U1V CMTQ4NTk=.pdf [gefunden am 2017-07-07]
- FLORIAN KOHLMAYER ET AL: "Flash: Efficient, Stable and Optimal K-Anonymity", PRIVACY, SECURITY, RISK AND TRUST (PASSAT), 2012 INTERNATIONAL CONFERENCE ON AND 2012 INTERNATIONAL CONFERNECE ON SOCIAL COMPUTING (SOCIALCOM), IEEE, 3. September 2012 (2012-09-03), Seiten 708-717, XP032302792, DOI: 10.1109/SOCIALCOM-PASSAT.2012.52 ISBN: 978-1-4673-5638-1 in der Anmeldung erwähnt
- KISHOR ABHANG VIKRAM ET AL: "Performance enhancement and analysis of privacy preservation using slicing approach over hadoop", 2016 3RD INTERNATIONAL CONFERENCE ON COMPUTING FOR SUSTAINABLE GLOBAL DEVELOPMENT (INDIACOM), BHARATI VIDYAPEETH, NEW DELHI AS THE ORGANIZER OF INDIACOM - 2016, 16. März 2016 (2016-03-16), Seiten 353-357, XP032986951, [gefunden am 2016-10-27]
- ZHANG XUYUN ET AL: "Scalable Iterative Implementation of Mondrian for Big Data Multidimensional Anonymisation", 10. November 2016 (2016-11-10), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 311 - 320, XP047361757, ISSN: 0302-9743 ISBN: 978-3-540-76785-5 [gefunden am 2016-11-10] das ganze Dokument

## Beschreibung

Die vorliegende Erfindung betrifft ein Verfahren ein System zum Anonymisieren von Datenbeständen.

Die Druckschrift US 7,269,578 betrifft Systeme und Verfahren zum De-Identifizieren oder Anonymisieren von Einträgen in einer Eingabedatenquelle. Ziel des Verfahrens ist es, Attributwerte, die auch in Kombination einen indirekten Personenbezug beinhalten, wie beispielsweise ein Geburtsdatum, in einer Datenmenge so zu verallgemeinern, dass ein Rückschluss auf konkrete Personen aus der Datenmenge auch dann nicht mehr möglich ist, wenn Hintergrundinformation hinzugezogen werden, wie beispielsweise ein Melderegister mit Geburtsdaten. Attribute mit einem indirekten Personenbezug werden als Quasi-Identifikator (Quasi Identifier) bezeichnet.

Ein Datensatz ist "k-anonym", wenn jede mögliche Abfrage über Kombinationen von Quasi-Identifikatoren stets entweder kein Ergebnis oder mindestens eine Anzahl von k Ergebnissen liefert. Dies wird dadurch erreicht, dass jede Kombination von generalisierten Quasi-Identifikatoren eine Gruppe von mindestens k Elementen beschreibt.

Zusätzlich gibt es über die k-Anonymität hinausgehende, stärkere Bedingungen an das Ergebnis der Anonymisierung. Diese stellen neben der Mindestanzahl von k Elementen je entstehende Gruppe auch Bedingungen an spezielle Attribute, die nicht generalisiert worden sind. Diese speziellen Attribute werden als sensitive Attribute bezeichnet. Gängige Kriterien hierfür sind "l-Diversität" (l-Diversity) und "t-Nähe" (t-Closeness).

Ein Beispiel für ein sensitives Attribut wäre beispielsweise das Attribut "Krankheit" in einem Patientendatensatz. "l-Diversität" bedeutet, dass jede entstehende Gruppe mindestens k Elemente enthält und dass in jeder Gruppe mindestens l verschiedene Werte für das sensitive Attribut anzutreffen sind (vgl. Ashwin Machanavajjhala, Daniel Kifer, Johannes Gehrke, and Muthuramakrishnan Venkitasubramaniam, 2007, "l-Diversity: Privacy beyond k-Anonymity", ACM Trans, Knowl. Discov. Data 1, 1, Article 3 (March 2007), DOI=http://dx.doi.org/10.1145/1217299.1217302).

"t-Nähe" bedeutet, dass sich die statistische Verteilung der sensitiven Attribute in jeder Gruppe nur um ein als Parameter gegebenes Maß von der statistischen Verteilung des sensitiven Attributes in der Gesamtmenge unterscheiden (vgl. N. Li, T. Li and S. Venkatasubramanian, "t-Closeness: Privacy Beyond k-Anonymity and 1-Diversity", 2007 IEEE 23rd International Conference on Data Engineering, Istanbul, 2007, pp. 106-115. doi: 10.1109/ICDE.2007.367856).

Um dies zu erzielen, werden für die Quasi-Identifikatoren sogenannte Generalisierungsstufen festgelegt. Durch Anwendung einer Generalisierung auf einen Quasi-Identifikator wird der Informationsgehalt der Attributwerte verringert, so dass ursprüngliche verschiedene Attributwerte gleich werden können. So können zum Beispiel die Postleitzahlen 53754 und 53757 beide zu 5375* generalisiert werden und würden somit in der ersten Generalisierungsstufe angeglichen werden.

Eine Generalisierung führt dazu, dass die Abfragen über Quasi-Identifikatoren weniger differenziert sind und die Ergebnismengen größer werden. Wenn ein Datensatz hinreichend generalisiert ist, dann erfüllt dieser das Kriterium der k-Anonymität.

Jedoch führt jede höhere Stufe der Generalisierung zu einem weiteren Informationsverlust in den Daten. Ein Verfahren, um den Informationsverlust zu verringern, ist es, die benötigten Generalisierungsstufen möglichst gering zu halten. Um dies zu erzielen, können auch geeignete Datensätze aus dem Datenbestand vollständig entfernt werden (Suppression).

Die Kombination von Generalisierungsstufen und Suppression zu finden, die auf einer Datenmenge mit möglichst wenig Informationsverlust k-Anonymität erzielt, ist ein algorithmisch komplexes Optimierungsproblem (NP-hart).

Verschiedene Algorithmen und Implementierung aus der Literatur und im Open-Source-Bereich stellen Heuristiken bereit, um auf einem Datenbestand eine Kombination von Generalisierung und Suppression zu finden, die k-Anonymität erreicht und nicht allzu viele Informationen aus dem Datenbestand entfernt.

Die bisherigen Lösungen sind jedoch nicht in der Lage, auf großen Datenmengen zu operieren, da diese voraussetzen, dass alle Daten der Datenmenge in den Hauptspeicher oder virtuellen Speicher eines einzelnen Rechners geladen werden und dort der Algorithmus ausgeführt wird. Damit sind diese Lösungen nicht für große Datenmengen (Big-Data) geeignet, deren Umfang größer als der Speicher eines Rechners ist.

Die Druckschrift Kohlmauer et. al, "Flash: Efficient, Stable and Optimal k-Anonymity", 2012) beschreibt eine Suchheuristik, die k-Anonymität auf der Basis von Generalisierung und Suppression erzielt. Dieser Algorithmus ist jedoch nicht verteilt, sondern als Einzelrechner-Lösung konzipiert. Der Algorithmus basiert, wie andere Heuristiken für die k-Anonymität, auf der Basis einer Generalisierung und Suppression auf einem sogenannten Generalisationsgraphen (Generalization-Lattice). Dieser Generalisationsgraph wird durch die Anzahl der Quasi-Identifikatoren und die Anzahl der pro Quasi-Identifikator angegebenen Generalisierungsstufen bestimmt.

Ein Knoten in dem Graphen umfasst einen Vektor, der genauso viele Elemente hat, wie Quasi-Identifikatoren existieren. In jeder Komponente des Vektors wird für jeden Quasi-Identifikator eingetragen, welche Generalisierungsstufe für diesen Quasi-Identifikator angewendet werden soll. Die Gesamtmenge aller Knoten gibt alle Kombinationsmöglichkeiten für die Generalisierung auf den Quasi-Identifikatoren an. Eine Kante wird zwischen zwei Knoten genau dann gezogen, wenn diese sich in genau einer Komponente um den Wert 1 unterscheiden.

Für jeden Knoten kann untersucht werden, ob, wenn die in diesem beschriebenen Generalisierungsstufen angewendet werden, der modifizierte Datenbestand die Bedingung der k-Anonymität, der 1-Diversität oder der t-Nähe erfüllt, möglicherweise unter Hinzunahme einer Suppression der Datensätze, die nicht die Gruppenstärke k erreichen. Ebenso kann für den Knoten ausgerechnet werden, welcher Informationsverlust bei der Anwendung des Knotens entstanden ist.

Dieser wird über eine Unterscheidbarkeits-Metrik (Discernability Metrik) ausgerechnet, in der die Anzahl der entstandenen Gruppen, die Größe sowie die Anzahl der unterdrückten ("suppressed") Datensätze eingehen. Darüber hinaus bietet der Algorithmus eine Suchheuristik an, die angibt, ob und welcher Knoten als nächstes zu prüfen ist.

Der Knoten mit dem geringsten Informationsverlust aller geprüften Knoten bestimmt das Ergebnis der Anonymisierung. Der Flash-Algorithmus führt alle diese Berechnungen und Prüfungen auf dem Datenbestand im Hauptspeicher aus. Damit ist er nicht auf große Datenmengen anwendbar, die in einem verteilten Big-Data-System gehalten und verarbeitet werden.

Die Druckschrift Ghinita, P. Karras, P. Kalnis und N. Mamoulis, "Fast Data Anonymization with Low Information Loss", in: Proceedings of the 33rd International Conference on Very Large Data Bases, VLDB '07, VLDB Endowment, 2007, S. 758-769, beschreibt einen Hilb-Algorithmus, mit dem überprüft werden kann, ob eine Generalisierung für sich allein genommen k-Anonymität erreicht.

In der Druckschrift X. Zhang et. al., "A Scalable Two-Phase Top-Down Specialization Approach for Data Anonymization Using MapReduce on Cloud", IEEE Transactions On Parallel And Distributed Systems, Vol. 25, NO. 2, February 2014, wird eine map-reduce-basierte Ausführung von TDS (Top-Down-Specialization) für eine k-Anonymität beschrieben. Dieses Verfahren bietet jedoch nicht die Flexibilität, mit einer beliebigen Suchheuristik auf dem kompletten Generalisierungsgraphen zu suchen.

Es ist die technische Aufgabe der vorliegenden Erfindung, eine Anonymisierung großer Datenbestände zu ermöglichen.

Diese Aufgabe wird durch technische Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird diese Aufgabe durch ein Verfahren zum Anonymisieren von Datenbeständen gelöst, mit den Schritten eines Bestimmens einer Kombination an Generalisierungsstufen für Quasi-Identifikatoren eines Datenbestandes an einem zentralen Knoten; eines Übermittelns der Kombination an Generalisierungsstufen an eine Mehrzahl von Unterknoten; und eines parallelen Durchführens einer Anonymisierung des Datenbestandes auf Basis der Kombination an Generalisierungsstufen durch die Unterknoten. Durch die Verwendung einer Mehrzahl von Unterknoten wird der technische Vorteil erreicht, dass auch große Datenbestände in einer geringen Zeit anonymisiert werden können.

In einer technisch vorteilhaften Ausführungsform des Verfahrens wird überprüft, ob der anonymisierte Datenbestand die Bedingung einer k-Anonymität erfüllt. Dadurch wird beispielsweise der technische Vorteil erreicht, dass sichergestellt werden kann, dass der Datenbestand die gewünschte Anonymität aufweist.

In einer weiteren technisch vorteilhaften Ausführungsform des Verfahrens wird eine Kombination an niedrigeren Generalisierungsstufen bestimmt, wenn der anonymisierte Datenbestand die Bedingung der k-Anonymität erfüllt. Dadurch wird beispielsweise der technische Vorteil erreicht, dass die Generalisierung des Datenbestandes sukzessive vermindert werden kann.

In einer weiteren technisch vorteilhaften Ausführungsform des Verfahrens wird eine Kombination an höheren Generalisierungsstufen bestimmt, wenn der anonymisierte Datenbestand die Bedingung der k-Anonymität nicht erfüllt. Dadurch wird beispielsweise der technische Vorteil erreicht, dass die Generalisierung des Datenbestandes sukzessive erhöht werden kann, bis k-Anonymität erreicht ist.

In einer weiteren technisch vorteilhaften Ausführungsform des Verfahrens wird eine Kombination an niedrigeren oder höheren Generalisierungsstufen an die Mehrzahl von Unterknoten übermittelt und eine Anonymisierung des Datenbestandes auf Basis der niedrigeren oder höheren Kombination an Generalisierungsstufen durch die Unterknoten parallel durchgeführt. Dadurch wird beispielsweise der technische Vorteil erreicht, dass die Generalisierung des Datenbestandes optimiert werden kann.

In einer weiteren technisch vorteilhaften Ausführungsform des Verfahrens wird das Bestimmen einer Kombination an Generalisierungsstufen auf Basis eines Generalisierungsgraphen durchgeführt. Dadurch wird beispielsweise der technische Vorteil erreicht, dass eine Hierarchie an Generalisierungsstufen erzeugt wird, die eine schnelle Auswahl höherer oder niedrigerer Generalisierungsstufen ermöglicht.

In einer weiteren technisch vorteilhaften Ausführungsform des Verfahrens ist der Generalisierungsgraph in den Speicher des zentralen Knoten geladen. Dadurch wird beispielsweise der technische Vorteil erreicht, dass die Generalisierungsstufen auf schnelle Weise durch den zentralen Knoten ausgewählt werden können. Alternativ kann der Generalisierungsgraph als verteilte Datenstruktur über mehrere Knoten hinweg gespeichert werden.

In einer weiteren technisch vorteilhaften Ausführungsform des Verfahrens wird der Generalisierungsgraph mittels einer vorgegeben Suchheuristik traversiert. Dadurch wird beispielsweise der technische Vorteil erreicht, dass Kombinationen unterschiedlicher Generalisierungsstufen mit wenigen Rechenschritten ausgewählt werden können.

In einer weiteren technisch vorteilhaften Ausführungsform des Verfahrens wird überprüft, ob der anonymisierte Datenbestand die Bedingung einer l-Diversität erfüllt. Dadurch wird beispielsweise der technische Vorteil erreicht, dass jede entstehende Gruppe mindestens k Elemente enthält und dass in jeder Gruppe mindestens l verschiedene Werte für das sensitive Attribut anzutreffen sind

In einer weiteren technisch vorteilhaften Ausführungsform des Verfahrens wird überprüft, ob der anonymisierte Datenbestand die Bedingung einer t-Nähe erfüllt. Dadurch wird beispielsweise der technische Vorteil erreicht, dass sich die statistische Verteilung der sensitiven Attribute in jeder Gruppe nur um ein als Parameter gegebenes Maß von der statistischen Verteilung des sensitiven Attributes in der Gesamtmenge unterscheiden.

In einer weiteren technisch vorteilhaften Ausführungsform des Verfahrens wird aus jedem Datensatz des Datenbestandes eine Zeichenkette als Gruppenschlüssel für die Anonymisierung erzeugt. Dadurch wird beispielsweise der technische Vorteil erreicht, dass die Größe der jeweiligen Gruppen für die Überprüfung der K-Anonymität mit geringen Aufwand festgestellt werden kann.

In einer weiteren technisch vorteilhaften Ausführungsform des Verfahrens wird der ursprüngliche Datenbestand gelöscht, wenn der anonymisierte Datenbestand die Bedingung der k-Anonymität erfüllt. Dadurch wird beispielsweise der technische Vorteil er-reicht, dass sich der Speicherbedarf verringert und ein Missbrauch des ursprünglichen Datenbestandes verhindert wird.

In einer weiteren technisch vorteilhaften Ausführungsform des Verfahrens ist der Datenbestand in einer parallelen Datenbank gespeichert. Dadurch wird beispielsweise der technische Vorteil erreicht, dass auf jeden Datensatz des Datenbestandes schnell und in paralleler Weise zugegriffen werden kann.

Gemäß einem zweiten Aspekt wird diese Aufgabe durch ein System zum Anonymisieren von Datenbeständen gelöst, mit einem zentralen Knoten zum Bestimmen einer Kombination an Generalisierungsstufen für Quasi-Identifikatoren eines Datenbestandes; einer Übermittlungseinrichtung zum Übermitteln der Kombination an Generalisierungsstufen an eine Mehrzahl von Unterknoten; und einer Mehrzahl an Unterknoten zum parallelen Durchführen einer Anonymisierung des Datenbestandes auf Basis der Kombination an Generalisierungsstufen. Dadurch werden die gleichen technischen Vorteile wie durch das Verfahren nach dem ersten Aspekt erreicht.

Gemäß einem dritten Aspekt wird diese Aufgabe durch ein Computerprogramm gelöst, das in den Speicher eines digitalen Computers geladen werden kann und das Softwarecodeabschnitte umfasst, mit denen das Verfahren nach dem ersten Aspekt ausgeführt werden kann, wenn das Computerprogramm auf Dem Computer läuft. Dadurch werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- Fig. 1: ein Blockdiagramm eines Verfahrens; und
- Fig. 2: eine schematische Ansicht eines Systems zum Anonymisieren von Datenbeständen.

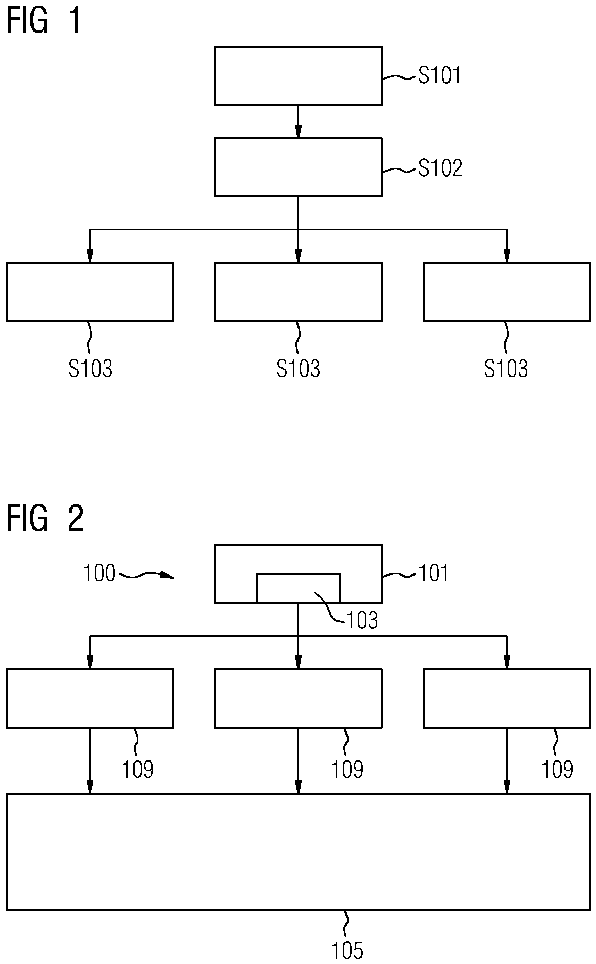

Fig. 1 zeigt ein Blockdiagramm eines Verfahrens zum Anonymisieren von Datenbeständen. Der Datenbestand umfasst eine Vielzahl einzelner Datensätze mit unterschiedlichen Attributen.

Das Verfahren umfasst den Schritt S101 eines Bestimmens einer Kombination an Generalisierungsstufen für Quasi-Identifikatoren eines Datenbestandes an einem zentralen Knoten. Die Quasi-Identifikatoren sind dabei Attribute mit einem indirekten Personenbezug, über die eine Identifizierung der Person möglich sein könnte, wie beispielsweise ein Geburtsdatum oder eine Postleitzahl einer Person.

Die Generalisierungsstufe gibt das Maß an Generalisierung an, der der Quasi-Identifikator unterzogen werden soll. Für den Quasi-Identifikator des Geburtsdatums kann die Generalisierungsstufe beispielsweise Tag (keine Generalisierung), Woche (1. Generalisierungsstufe), Monat (2. Generalisierungsstufe) oder Jahr (3. Generalisierungsstufe) betragen. Für den Quasi-Identifikator der Postleitzahl kann die Generalisierungsstufe darin bestehen, eine oder mehrere Ziffern der Postleitzahl zu entfernen, beispielsweise 80336 (keine Generalisierung), 8033X (1. Generalisierungsstufe), 803XX (2. Generalisierungsstufe), 80XXX (3. Generalisierungsstufe) oder 8XXXX (4. Generalisierungsstufe). Für jeden Quasi-Identifikator des Datenbestandes wird eine jeweilige Generalisierungsstufe bestimmt.

Anschließend umfasst das Verfahren den Schritt S102 eines Übermittelns der bestimmten Kombination an Generalisierungsstufen an eine Mehrzahl von Unterknoten. In Schritt S103 führen die Unterknoten eine Anonymisierung des Datenbestandes und der jeweiligen Datensätze auf Basis der Kombination an Generalisierungsstufen parallel durch. Bei dem zentralen Knoten und den Unterknoten handelt es sich beispielsweise um eigenständige Rechner, die jeweils einen Prozessor und eine Speicher aufweisen, auf den der Prozessor über einen Adress- und Datenbus zugreifen kann.

Durch das Verfahren wird ein Algorithmus zum Anonymisieren von Datenbeständen in verschiedene Bestandteile zerteilt, von denen einige zur verteilten Ausführung auf Unterknoten parallelisiert werden, so dass der Algorithmus in einem Big-Data-System parallel auf verteilt gespeicherten Datenbeständen angewendet werden kann. Als Ausführungsumgebung kann ein verteiltes Big-Data-System verwendet werden, wie beispielsweise Spark/Hadoop oder eine massiv parallele Datenbank.

Fig. 2 zeigt eine schematische Ansicht eines Systems 100 zum Anonymisieren von Datenbeständen 105. Das System 100 umfasst einen zentralen Knoten 101, wie beispielsweise einen Computer, zum Bestimmen einer Kombination an Generalisierungsstufen für die Quasi-Identifikatoren des Datenbestandes 105. Mittels einer Übermittlungseinrichtung 103, wie beispielsweise einer Netzwerkschnittstelle, wird die Kombination an Generalisierungsstufen an eine Mehrzahl von Unterknoten 109 übermittelt. Die Mehrzahl an Unterknoten 109, wie beispielsweise mit dem zentralen Knoten 101 über ein Netzwerk verbundene Computer, führen die Anonymisierung des Datenbestandes 105 auf Basis der Kombination an Generalisierungsstufen parallel und gleichzeitig durch. Das Ergebnis dieser Anonymisierung wird zwischengespeichert.

Die einzelnen Bestandteile a) bis e) des parallelen Algorithmus sind:
a) Eine Steuerung auf dem zentralen Knoten 101 konstruiert einen Generalisierungsgraphen GG auf der Basis der spezifizierten Quasi-Identifikatoren und deren Generalisierungsstufen, die zuvor eingegeben worden sind. Typischerweise werden jeweils höchstens 10 Quasi-Identifikatoren und Generalisierungsstufen angegeben.
   Damit ist der Generalisierungsgraph GG als Datenstruktur prinzipiell klein genug, um in dem Speicher des zentralen Knotens 101 gehalten zu werden. Standardmäßige Komprimierungstechniken können ebenfalls auf den Generalisierungsgraph GG angewendet werden. Die Größe des Generalisierungsgraphen GG ist unabhängig von der Größe des zu bearbeitenden Datenbestandes 105 und stellt daher keinen Flaschenhals für die Verarbeitung großer Datenmengen dar. Falls der Generalisierungsgraph zu groß für die Darstellung auf einem Rechner ist, kann er auch in einer auf mehreren Unterknoten verteilt gespeicherten Datenstruktur abgelegt werden. In diesem Fall ist weiterhin die Ausführung der Suchheuristik zentralisiert, nur die Ausführung elementarer Graphoperationen erfolgt über Kommunikation mit den entsprechenden Unterknoten.
   Des Weiteren wendet der zentrale Knoten 101 eine Suchheuristik H auf dem Generalisierungsgraphen GG an, um den als nächstes zu prüfenden Knoten des Generalisierungsgraphen GG zu bestimmen. Dies können auch durch die Parallelisierung mehrere Knoten des Generalisierungsgraphen GG sein. Eine weitere Eingabe für die Suchheuristik H sind neben dem Generalisierungsgraphen GG die Ergebnisse der bislang bewerteten Knoten des Generalisierungsgraphen GG.
   Die konkrete Ausprägung der Suchheuristik ist nicht wesentlich. Es können bestehende Suchheuristiken verwendet werden, die als Ergebnis der Bewertung eines Knoten im Generalisierungsgraphen GG lediglich die Information verwenden, ob ein Knoten den gewünschten Grad an Anonymisierung erreicht, d.h. Gruppen mindestens der Größe k, wenn höchstens S-viele vertrauliche Datensätze (Confidential Records) unterdrückt oder weggelassen werden. Andere Suchheuristiken können auch weitere Informationen als Ergebnis der Bewertung eines Knotens verwenden, die sich zum Beispiel aus einer Unterscheidbarkeitsmetrik (Discernability Metrik) oder dem Informationsverlust ergeben (siehe d)).
b) Eine Kombination von Generalisierungen des Datenbestandes 105 wird auf den Quasi-Identifikatoren in verteilter und hypothetischer Weise durch die Unterknoten 109 durchgeführt. Jeder Knoten des Generalisierungsgraphen GG bestimmt dabei eine mögliche Kombination von Generalisierungsstufen.
   Diese können in einem verteilten Big-Data-System parallel auf allen verteilt liegenden Datensätzen des Datenbestandes 105 durchgeführt werden. Als Ergebnis einer Generalisierung auf einem Datensatz werden die Ergebnisse der Generalisierung auf den einzelnen Quasi-Identifikatoren zu einer einzigen Zeichenkette konkatenieren, die als Gruppenschlüssel bezeichnet wird.
   Die Menge aller Gruppenschlüssel ist das Ergebnis einer verteilten hypothetischen Generalisierung auf dem Datenbestand 105. Im Falle von l-Diversität oder t-Nähe wird für jeden einzelnen Datensatz die Menge aus Gruppenschlüssel und Werten der sensitiven Attribute als Ergebnis betrachtet.
c) Es wird eine verteilte Überprüfung durch die Unterknoten 109 durchgeführt, ob die hypothetische Generalisierung auf Basis der vorausgewählten Kombination von Generalisierungsstufen das Kriterium der k-Anonymität, der 1-Diversität oder t-Nähe erfüllt. Dies wird auf Basis einer verteilten Berechnung einer Aggregation basierend auf dem Gruppierungsergebnis aus Schritt b) nach dem Gruppenschlüssel durchgeführt.
   c1) Zur Überprüfung des Kriteriums der k-Anonymität wird auf dem Ergebnis aus b) durch eine verteilte Aggregation die jeweilige Gruppengröße der jeweiligen Gruppenschlüssel berechnet. Jeder gleiche Gruppenschlüssel wird mit dem Wert "1" gezählt und die Summe für jeweils gleiche Gruppenschlüssel gebildet, beispielsweise in einem Combine/Reduce-Schritt in Hadoop oder einem ReduceByKey in Spark.
      Das Ergebnis ist ein verteilter Datensatz, der pro Gruppe ein Element enthält, das ein Paar aus Gruppenschlüssel und Gruppengröße umfasst. Gruppen mit einer Gruppengröße größer oder gleich k werden beibehalten, die anderen werden als "suppressed" markiert (siehe Schritte d) und e)).
   c2) Ist l-Diversität erfordert, so erfolgt zusätzlich zu Schritt c1) eine weitere Überprüfung. Für jede nicht markierte Gruppe wird eine verteile Aggregation durchgeführt, die die Anzahl der verschiedenen Werte für jedes sensitive Attribut innerhalb jeder Gruppe bestimmt. Dies kann in Hadoop wieder durch einen Combine/Reduce-Schritt auf Basis der Gruppenschlüssel oder in Spark durch einen combineByKey-Aggregator durchgeführt werden, der Datenstrukturen für die Werte aufbaut und verteilt zusammenführt. Nun wird parallel für jede Gruppe überprüft, ob jedes sensitive Attribut mindestens l Elemente enthält. Falls dies nicht der Fall ist, so wird die Gruppe als "suppressed" markiert.
   c3) Ist t-Nähe gefordert, so erfolgt zusätzlich zu Schritt c1) eine weitere Überprüfung. Für jede Gruppe, die nicht als vertraulich ("Confidential") markiert ist, werden verteilte Aggregationen durchgeführt, die die Häufigkeit des Auftretens der Werte jedes sensitiven Attributes innerhalb jeder Gruppe bestimmen.
      Dies kann beispielsweise in Hadoop durch einen Combine/Reduce-Schritt auf Basis der Gruppenschlüssel oder in Spark durch einen combineByKey-Aggregator durchgeführt werden, der Datenstrukturen für die Häufigkeitsverteilungen aufbaut und verteilt zusammenführt. Nun wird parallel für jedes sensitive Attribut der Gruppe überprüft, ob die entstandene Häufigkeitsverteilung innerhalb der erlaubten Häufigkeitsverteilung des sensitiven Attributes auf der Gesamtmenge liegt.
      Diese ist vorab vor Schritt a) einmal nach dem gleichen Verfahren parallel berechnet worden und an alle beteiligten Unterknoten 109 zur Verfügung gestellt worden. Der Unterschied in der Häufigkeitsverteilung jedes sensitiven Attributes innerhalb einer Gruppe im Vergleich zu der globalen Häufigkeitsverteilung des sensitiven Attributes kann mit dem Pearson-Korrelationskoeffizienten berechnet werden. Ist der Unterschied eines sensitiven Attributes größer als die vorgegebene maximale Abweichung, wird die Gruppe als "suppressed" markiert.
d) Es wird eine verteilte Berechnung des Informationsverlusts aus der Anwendung der Schritte b) und c) durchgeführt. Die Eingabe in diesem Schritt ist eine verteilte Datenstruktur, in der die Paare aus Gruppenschlüssel, Gruppengröße und Suppressed-Attribut (True/False) gespeichert sind. Hieraus kann die Unterscheidbarkeitsmetrik in einer verteilten Aggregation berechnet werden. Andere entropie-basierte Maße wie ein Informationszuwachs (Information Gain) sind ebenfalls anwendbar, indem aus dem Gruppenschlüssel wieder die Werte der anonymisierten Quasi-Identifikatoren bestimmt und mit den Originalwerten verglichen werden.
e) Es wird eine verteilte Ausführung der Generalisierung oder Suppression durchgeführt. Die zentrale Steuerung mittels des zentralen Knotens 101 aus Schritt a) führt auf dem Generalisierungsgraphen die Suchheuristik H durch, nach der Knoten für die Ausführung der Schritte b), c), und d) bestimmt werden.
   Die Auswahl der Knoten erfolgt durch die Suchheuristik H. Hierzu können mehrere Knoten des Generalisierungsgraphen parallel geprüft werden, da der Schritt b) immer zu einer hypothetischen Generalisierung zur Erzeugung des jeweiligen Gruppenschlüssels führt. Dies bedeutet für die Suchheuristik H, dass alle Knoten, die in der inneren Schleife als zu evaluierende Knoten bestimmt werden und auf dem Heap gespeichert werden, parallel evaluiert werden können.
   Die Suchheuristik H beendet die Suche, wenn ein zumeist lokales Optimum gefunden worden ist und bestimmt den Knoten, nach dem die Generalisierung oder Suppression am geeignetsten zu erfolgen hat. Der Algorithmus führt nun wie in b) die entsprechende Generalisierung verteilt auf dem tatsächlichen Datenbestand durch und entfernt, wie in c) beschrieben, die Datensätze, die weggelassen werden müssen.

Der Ablauf des gesamten Algorithmus im Pseudo-Code ist wie folgt:
Zur Eingabe werden verwendet:
- D:: Datenbestand, beispielsweise verteilt gespeichert in einem Cluster oder einer massiv parallelen Datenbank;
- QI:: Liste der Quasi-Identifikatoren;
- GS:: Generalisierungsstufen pro Quasi-Identifikator;
- SA:: sensitive Attribute im Falle von l-Diversität oder t-Nähe;
- k:: gewünschte Mindest-Gruppengröße s, beispielsweise Prozentsatz an erlaubter Supression;
- l:: eine Ganzzahl, falls eine 1-Diversität gefordert ist:
- sigma:: erlaubte Abweichung der Verteilung des sensitiven Attributes in den Gruppen, falls t-Nähe gefordert ist;
- H:: Suchheuristik im Generalisierungsgraph; und
- M:: Evaluierungsmetrik.

Aus der Eingabe folgt als Ausgabe ein generalisierter Datenbestand D-anon.
1) Aus QI und GS wird ein Generalisierungsgraph GG in der zentralen Steuerung berechnet. Dabei sind in jedem Knoten des Generalisierungsgraphs GG zu Beginn alle Attribute mit dem Wert "False" oder "nicht" gesetzt und das Attribut "Qualität" nicht gesetzt.
   Die Generalisierungsstufe für jeden Quasi-Identifikator wird definiert. Das Attribut "Evaluated" wird auf "True" oder "False" gesetzt. Das Attribut "k-Anonymity" wird auf "True" oder "False" gesetzt. Gegebenenfalls werden die Attribute "1-Diversität" und "t-Nähe" auf "True" oder "False" gesetzt. Das Attribut "Quality" wird gesetzt.
2) Schleife: Traversiere den Generalisierungsgraph GG gemäß Suchheuristik H;
   a. Schreibe in Kandidatenliste CL eine Liste der Kandidaten gemäß Suchheuristik H(GG);
   b. Falls Kandidatenliste CL nicht leer ist, führe parallel für alle Kandidaten C in der Kandidatenliste CL die folgenden Schritte aus:
      i. Schreibe in S_C eine Tabelle der Gruppenschlüssel (evtl. mit sensitivem Attribut, falls gesetzt), die wie in b) beschrieben parallel berechnet sind;
      ii. C.k-Anonymity <- parallel evaluiert auf Basis von S_C, wie in c1) beschrieben;
      iii. C.l-Diversity <- parallel evaluiert auf Basis von S_C, wie in c2) beschrieben;
      iv. C.t-Closeness <- parallel evaluiert auf Basis von S_C, wie in c3) beschrieben;
      v. C.Quality <- parallel evaluiert auf Basis von S_C, wie in d) beschrieben
      vi. C.evaluated <- True
      vii. GG.C <- C
         Sonst: Beende Schleife
3) GG-anon <- Knoten aus dem Generalisierungsgraph GG mit C.k-anonymity = "True" und zusätzlich C.l-Diversity = "True", C.t-Closeness = "True";
4) C_best <- Knoten aus GG-anon mit dem der besten C.Quality; und
5) D-anon <- parallele Anwendung von C_best auf D, wie in e) beschrieben.

Die Anonymisierung spielt sowohl beim Verarbeiten und Speichern von Datenbeständen 105 als auch beim Teilen von Daten und Informationen eine große Rolle. Big-Data-Systeme verarbeiten die anfallenden Datenbestände 105, um diese auszuwerten und einen Nutzen aus diesen Datenbeständen 105 ziehen zu können. Die Anonymisierung von Datenbeständen 105 ist eine Teilkomponente dieser Lösungen. Durch das beschriebene Verfahren wird eine Lauffähigkeit auf Big-Data-Systemen ermöglicht.

Eine Generalisierung und Suppression ist ein wichtiges Verfahren für die k-Anonymität, das wiederum ein wichtiges Kriterium für die Anonymität des Datenbestandes 105 ist. Die bisherigen Verfahren zur k-Anonymität, l-Diversität und t-Nähe auf der Basis von Generalisierung und Suppression arbeiten nur innerhalb eines einzigen Speichers (In-Memory) und können folglich nur auf einem Datenbestand 105 ausgeführt werden, der vollständig in den Speicher eines einzigen Knotens 101 geladen werden kann.

Damit sind diese Verfahren nicht für einen Datenbestand 105 verwendbar, der im Volumen derart umfangreich ist (Big Data), dass dieser nicht mehr auf einem Rechner alleine gespeichert werden kann. Dadurch ist durch die Hardware eine Obergrenze für eine Verarbeitbarkeit des Datenbestandes 105 gegeben.

Durch das Verfahren wird ein Algorithmus bereitgestellt, der zentrale und parallelisierte Ausführungsteile umfasst. Die zentralen Ausführungsteile sind im Speicherbedarf von dem Datenvolumen des Datenbestandes 105 unabhängig, so dass durch die parallelisierte Ausführung größere Datenvolumen verarbeitet werden können, als dies bisher möglich war.

Das Verfahren erlaubt es, k-Anonymität, l-Diversität und t-Nähe auf der Basis von Generalisierung und Suppression verteilt auf großen Datenbeständen 105 anzuwenden. Das Verfahren ist auf verteilten Big-Data-Systemen einsetzbar, wie beispielsweise Hadoop, Spark oder massiven parallelen Datenbanken.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Verfahren zum Anonymisieren von Datenbeständen (105), mit den Schritten:
- Bestimmen (S101) einer Kombination an Generalisierungsstufen für Quasi-Identifikatoren eines Datenbestandes (105) an einem zentralen Knoten (101);
- Übermitteln (S102) der Kombination an Generalisierungsstufen an eine Mehrzahl von Unterknoten (109); und
- paralleles Durchführen (S103) einer Anonymisierung des Datenbestandes (105) auf Basis der Kombination an Generalisierungsstufen durch die Unterknoten (109) .

2. Verfahren nach Anspruch 1, wobei überprüft wird, ob der anonymisierte Datenbestand (105) die Bedingung einer k-Anonymität erfüllt.

3. Verfahren nach Anspruch 2, wobei eine Kombination an niedrigeren Generalisierungsstufen bestimmt wird, wenn der anonymisierte Datenbestand (105) die Bedingung der k-Anonymität erfüllt.

4. Verfahren nach Anspruch 2, wobei eine Kombination an höheren Generalisierungsstufen bestimmt wird, wenn der anonymisierte Datenbestand (105) die Bedingung der k-Anonymität nicht erfüllt.

5. Verfahren nach Anspruch 3 oder 4, wobei eine Kombination an niedrigeren oder höheren Generalisierungsstufen an die Mehrzahl von Unterknoten (109) übermittelt wird und eine Anonymisierung des Datenbestandes (109) auf Basis der niedrigeren oder höheren Kombination an Generalisierungsstufen durch die Unterknoten (109) parallel durchgeführt wird.

6. Verfahren nach einem der vorangehenden Ansprüche, wobei das Bestimmen einer Kombination an Generalisierungsstufen auf Basis eines Generalisierungsgraphen GG durchgeführt wird.

7. Verfahren nach Anspruch 6, wobei der Generalisierungsgraph GG in den Speicher des zentralen Knoten (101) geladen ist.

8. Verfahren nach Anspruch 6 oder 7, wobei der Generalisierungsgraph GG mittels einer vorgegeben Suchheuristik (H) traversiert wird.

9. Verfahren nach einem der vorangehenden Ansprüche, wobei überprüft wird, ob der anonymisierte Datenbestand (105) die Bedingung einer l-Diversität erfüllt.

10. Verfahren nach einem der vorangehenden Ansprüche, wobei überprüft wird, ob der anonymisierte Datenbestand (105) die Bedingung einer t-Nähe erfüllt.

11. Verfahren nach einem der vorangehenden Ansprüche, wobei aus jedem Datensatz des Datenbestandes (105) eine Zeichenkette als Gruppenschlüssel für die Anonymisierung erzeugt wird.

12. Verfahren nach einem der vorangehenden Ansprüche, wobei der ursprüngliche Datenbestand (105) gelöscht wird, wenn der anonymisierte Datenbestand die Bedingung der k-Anonymität erfüllt.

13. Verfahren nach einem der vorangehenden Ansprüche, wobei der Datenbestand in einer parallelen Datenbank gespeichert ist.

14. System (100) zum Anonymisieren von Datenbeständen (105), mit:
- einem zentralen Knoten (101) zum Bestimmen einer Kombination an Generalisierungsstufen für Quasi-Identifikatoren eines Datenbestandes (105);
- einer Übermittlungseinrichtung (103) zum Übermitteln der Kombination an Generalisierungsstufen an eine Mehrzahl von Unterknoten (109); und
- einer Mehrzahl an Unterknoten (109) zum parallelen Durchführen einer Anonymisierung des Datenbestandes (105) auf Basis der Kombination an Generalisierungsstufen.

15. Computerprogramm, das in den Speicher eines digitalen Computers geladen werden kann und das Softwarecodeabschnitte umfasst, mit denen das Verfahren nach einem der Ansprüche 1 bis 13 ausgeführt werden kann, wenn das Computerprogramm auf dem Computer läuft.

## Claims

1. Method for anonymizing data stocks (105), having the steps:
- determining (S101) a combination of generalization levels for quasi-identifiers of a data stock (105) on a central node (101);
- transmitting (S102) the combination of generalization levels to a multiplicity of sub-nodes (109); and
- performing (S103) anonymization of the data stock (105) in parallel by way of the sub-nodes (109) on the basis of the combination of generalization levels.

2. Method according to Claim 1, wherein it is checked whether the anonymized data stock (105) meets the condition of k-anonymity.

3. Method according to Claim 2, wherein a combination of lower generalization levels is determined if the anonymized data stock (105) meets the condition of k-anonymity.

4. Method according to Claim 2, wherein a combination of higher generalization levels is determined if the anonymized data stock (105) does not meet the condition of k-anonymity.

5. Method according to Claim 3 or 4, wherein a combination of lower or higher generalization levels is transmitted to the multiplicity of sub-nodes (109) and anonymization of the data stock (105) is performed in parallel by the sub-nodes (109) on the basis of the lower or higher combination of generalization levels.

6. Method according to one of the preceding claims, wherein the determination of a combination of generalization levels is performed on the basis of a generalization lattice GG.

7. Method according to Claim 6, wherein the generalization lattice GG is loaded into the memory of the central node (101) .

8. Method according to Claim 6 or 7, wherein the generalization lattice GG is traversed by way of a predefined search heuristic (H).

9. Method according to one of the preceding claims, wherein it is checked whether the anonymized data stock (105) meets the condition of l-diversity.

10. Method according to one of the preceding claims, wherein it is checked whether the anonymized data stock (105) meets the condition of t-closeness.

11. Method according to one of the preceding claims, wherein a character string is generated from each dataset of the data stock (105) as a group key for the anonymization.

12. Method according to one of the preceding claims, wherein the original data stock (105) is deleted if the anonymized data stock meets the condition of k-anonymity.

13. Method according to one of the preceding claims, wherein the data stock is stored in a parallel database.

14. System (100) for anonymizing data stocks (105), having:
- a central node (101) for determining a combination of generalization levels for quasi-identifiers of a data stock (105);
- a transmission device (103) for transmitting the combination of generalization levels to a multiplicity of sub-nodes (109); and
- a multiplicity of sub-nodes (109) for performing anonymization of the data stock (105) in parallel on the basis of the combination of generalization levels.

15. Computer program that is able to be loaded into the memory of a digital computer and that comprises software code sections by way of which the method according to one of Claims 1 to 13 is able to be executed when the computer program runs on the computer.

## Revendications

1. Procédé d'anonymisation d'ensembles de données (105), comportant les étapes suivantes :
- détermination (S101) d'une combinaison de niveaux de généralisation pour des quasi-identifiants d'un ensemble de données (105) au niveau d'un nœud central (101) ;
- transmission (S102) de la combinaison de niveaux de généralisation à une pluralité de sous-nœuds (109) et
- exécution parallèle (S103) d'une anonymisation de l'ensemble de données (105) sur la base de la combinaison de niveaux de généralisation par les sous-nœuds (109).

2. Procédé selon la revendication 1, dans lequel il est vérifié si l'ensemble de données anonymisé (105) remplit la condition d'une k-anonymité.

3. Procédé selon la revendication 2, une combinaison de niveaux de généralisation inférieurs étant déterminée si l'ensemble de données anonymisé (105) remplit la condition de la k-anonymité.

4. Procédé selon la revendication 2, une combinaison de niveaux de généralisation supérieurs étant déterminée si l'ensemble de données anonymisé (105) ne remplit pas la condition de la k-anonymité.

5. Procédé selon la revendication 3 ou 4, une combinaison de niveaux de généralisation inférieurs ou supérieurs étant transmise à la pluralité de sous-nœuds (109) et une anonymisation de l'ensemble de données (109) étant effectuée parallèlement par les sous-nœuds (109) sur la base de la combinaison de niveaux de généralisation inférieurs ou supérieurs.

6. Procédé selon l'une des revendications précédentes, la détermination d'une combinaison de niveaux de généralisation étant effectuée sur la base d'un graphe de généralisation GG.

7. Procédé selon la revendication 6, le graphe de généralisation GG étant chargé dans la mémoire du nœud central (101).

8. Procédé selon la revendication 6 ou 7, le graphe de généralisation GG étant traversé au moyen d'une heuristique de recherche donnée (H).

9. Procédé selon l'une des revendications précédentes, dans lequel il est vérifié si l'ensemble de données anonymisé (105) remplit la condition d'une l-diversité.

10. Procédé selon l'une des revendications précédentes, dans lequel il est vérifié si l'ensemble de données anonymisé (105) remplit la condition d'une t-proximité.

11. Procédé selon l'une des revendications précédentes, à partir de chaque jeu de données de l'ensemble de données (105) étant générée une chaîne de caractères en tant que clé de groupe pour l'anonymisation.

12. Procédé selon l'une des revendications précédentes, l'ensemble de données d'origine (105) étant effacé si l'ensemble de données anonymisé remplit la condition de la k-anonymité.

13. Procédé selon l'une des revendications précédentes, l'ensemble de données étant stocké dans une base de données parallèle.

14. Système (100) d'anonymisation d'ensembles de données (105) comportant :
- un nœud central (101) pour déterminer une combinaison de niveaux de généralisation pour des quasi-identifiants d'un ensemble de données (105) ;
- un dispositif de transmission (103) pour transmettre la combinaison de niveaux de généralisation à une pluralité de sous-nœuds (109) et
- une pluralité de sous-nœuds (109) pour l'exécution parallèle d'une anonymisation de l'ensemble de données (105) sur la base de la combinaison de niveaux de généralisation.

15. Programme informatique qui peut être chargé dans la mémoire d'un ordinateur numérique et qui comprend des parties de code logiciel permettant d'exécuter le procédé selon l'une des revendications 1 à 13 lorsque le programme informatique tourne sur l'ordinateur.
